# EUROPÄISCHE PATENTSCHRIFT

(11) **EP 3 851 194 B1**
(45) Veröffentlichungstag und Bekanntmachung des Hinweises auf die Patenterteilung: **23.07.2025**
(21) Anmeldenummer: 21151271.0
(22) Anmeldetag: 13.01.2021
(51) Int. Cl.: B02C 13/18, B02C 13/288, C01B 32/205, B02C 23/12

(54) **VORRICHTUNG UND VERFAHREN ZUM VERRUNDEN VON GRAPHITFLOCKEN EINES GRAPHITMATERIALS**
DEVICE AND METHOD FOR ROUNDING GRAPHITE FLAKES OF A GRAPHITE MATERIAL
DISPOSITIF ET PROCÉDÉ D'ARRONDISSEMENT DES FLOCONS DE GRAPHITE D'UNE MATIÈRE GRAPHITE

(30) Priorität: 16.01.2020 DE 102020100907
(43) Veröffentlichungstag der Anmeldung: 21.07.2021
(73) Patentinhaber: NETZSCH Trockenmahltechnik GmbH, 95100 Selb (DE)
(72) Erfinder: Sickel, Hermann, 35516 Münzenberg (DE); Höfels, Christian, 63457 Hanau (DE); Herzog, Manuel, 36391 Sinntal (DE)
(74) Vertreter: Benninger Patentanwaltskanzlei

(56) Entgegenhaltungen:
- CN-U- 201 580 989
- DE-A1- 19 520 325
- DE-B- 1 286 386

## Beschreibung

Die vorliegende Erfindung betrifft eine Vorrichtung und ein Verfahren zum Verrunden von Graphitflocken eines Graphitmaterials gemäß den Merkmalen der unabhängigen Ansprüche.

### Stand der Technik

Die Erfindung betrifft ein Verfahren zur Herstellung eines Graphitpulvers, insbesondere zur Verrundung von Flockengraphit. Graphit besteht aus Kohlenstoff und kommt natürlich vor, kann aber auch künstlich erzeugt werden. Künstliches Graphit wird beispielsweise aus Braun- oder Steinkohle bzw. Öl mittels Verkoken hergestellt, wobei Kristalle entstehen. Die so hergestellten Kristalle sind aber nur dann gleichmäßig, wenn der Herstellungsprozess in vielen Stufen erfolgt. Dies ist entsprechend teuer. Natürlicher Graphit kommt als amorpher Graphit, Flockengraphit oder Adergraphit vor, insbesondere bildet natürliches Graphit graue bis schwarze hexagonale Kristalle, die in der Regel schichtartig übereinander gelagert angeordnet sind. Amorpher Graphit ähnelt dem künstlichen Graphit, d.h. die Kristallgröße ist gering.

Graphit zeichnet sich durch eine hohe Hitzebeständigkeit und eine sehr gute elektrische und thermische Leitfähigkeit aus. Graphitpulver wird beispielsweise zur Herstellung von Batterien verwendet, insbesondere als Negativelektrodenmaterial. Die Veröffentlichungsschrift DE 11 2013 005 116 T5 beschreibt ein kohlenstoffhaltiges Material für Lithium-Luft-Batteriekathoden, welches eine höhere Kapazität als herkömmliche kohlenstoffhaltige Materialien zeigt.

Die Veröffentlichungsschrift DE 11 2016 000 490 T5 beschreibt ein Verfahren zum Herstellen eines Graphitpulvers für ein Negativelektrodenmaterial für eine Lithiumionensekundärbatterie, welches ein Verfahren, bei dem ein Graphitvorläufer pulverisiert wird, und ein Verfahren umfasst, bei dem das Gemisch des pulverisierten Graphitvorläufers und einer alkalischen Verbindung einer Graphitierungsbehandlung durch Erhitzen des Gemisches bei 2800 bis 3500°C unterworfen wird.

Die Patentschrift DE 1286386 B beschreibt eine Schläger- oder Schleuderprallmühle mit Sichter bestehend aus einer zylindrischen Mahlkammer, in der ein Schleuderrotor und koaxial zu diesem ein aus einem getrennt angetriebenen Sichterrotor bestehender Zentrifugalsichter angeordnet sind. Zwischen dem Zerkleinerungsrotor und dem Zentrifugalsichter ist ein Leitring angeordnet, der den Zentrifugalsichter mit radialem Abstand umgibt und mit der Mahlkammerwand einen Ringkanal bildet, der mit Leitschaufeln versehen ist.

Die Offenlegungsschrift DE 19520325 A1 offenbart eine Sichtermühle mit einem von einem Gehäuse umgebenen Innenraum, in dem ein Windsichter und ein Mahlrotor mit Mahlwerkzeugen angeordnet ist.

Die Gebrauchsmusterschrift beschreibt eine Vorrichtung zum Zusammenstoßen von Schneidwerkzeugen mit Graphitmaterial. Die Schneidvorrichtung besteht aus einem Zahnkranz und einer rotierenden Scheibe. Wenn das Material in einen Spalt zwischen der rotierenden Scheibe und dem Zahnkranz gelangt, werden die natürlichen kristallinen Graphitflocken durch Aufprallen, Schneiden, Reiben im Luftstrom verarbeitet und dabei zu kugelförmigen oder kugelähnlichen Körnern verarbeitet.

Für bestimmte Anwendungen werden verrundete Graphitflocken benötigt, insbesondere wird Graphitpulver benötigt, dass Graphitteilchen einer bestimmten Teilchengröße und vorzugsweise einer homogenen verrundeten Form, insbesondere ohne Ecken und Kanten, aufweist.

### Beschreibung

Die Aufgabe der Erfindung besteht darin, eine Vorrichtung und ein Verfahren bereitzustellen, mit denen ein Graphitpulver umfassend verrundete Graphitteilchen, beispielsweise für die Verwendung zur Herstellung von Batterien, auf einfache und kostengünstige Weise hergestellt werden kann.

Die obige Aufgabe wird durch eine Vorrichtung zum Verrunden von eines Graphitmaterials, insbesondere von Graphitflocken, und einem Verfahren zum Verrunden eines Graphitmaterials gelöst, die die Merkmale in den unabhängigen Patentansprüchen umfassen. Weitere vorteilhafte Ausgestaltungen werden durch die Unteransprüche beschrieben.

Die Vorrichtung umfasst eine Aufgabeeinrichtung zur Zuführung des zu verrundenden Graphitmaterials, eine Mehrzahl von rotatorisch umlaufend ausgebildeten Verrundungswerkzeugen, mindestens einen Leitapparat, welcher eine Mehrzahl von Leitelementen und einen inneren Leitring und der das Graphitmaterial zu den Verrundungswerkzeugen und/oder einer Trenneinrichtung hinführt, sowie eine Trenneinrichtung zum Abtrennen von Feinmaterial und Feinstmaterial, welches nachfolgende Verarbeitungsschritte stören würde. Eine Mehrzahl von Verrundungswerkzeugen ist in regelmäßiger Anordnung an einer um eine Drehachse und in einer Drehrichtung rotierenden Scheibe angeordnet, insbesondere sind die Verrundungswerkzeuge in regelmäßiger Anordnung am äußeren Umfang der rotierenden Scheibe befestigt. Weiterhin weist die Vorrichtung mindestens einen Produktauslass auf, über den das innerhalb der Vorrichtung bearbeitete und insbesondere verrundete Graphitmaterial aus der Vorrichtung entnommen werden kann. Weiterhin ist vorgesehen, dass oberhalb der Verrundungswerkzeuge ein Abdeckring angeordnet ist. Vorzugsweise erstreckt sich der Abdeckring über alle am äußeren Umfang der Scheibe angeordneten Verrundungswerkzeuge. Der Abdeckring führt zu einer verbesserten internen Strömungsführung einer Prozessluft und somit auch des innerhalb der Prozessluft geführten Graphitmaterials innerhalb der Vorrichtung, insbesondere ermöglicht der Abdeckring eine vorteilhafte Zirkulation des Graphitmaterials innerhalb der Vorrichtung. Der Abdeckring verhindert, dass das grobe Graphitmaterial, insbesondere die Graphitflocken und/oder bereits verrundete Graphitteilchen, durch eine an den Verrundungswerkzeuge ausgebildete Druckwelle nach oben geschleudert werden und ohne Kontakt mit den Verrundungswerkzeugen durch die Prozessluft über die Verrundungswerkzeuge hinweggeleitet werden. Der Abdeckring erzwingt insbesondere einen mehrfachen Wirkkontakt zwischen dem groben Graphitmaterial und den Verrundungswerkzeugen, indem er den Bewegungsraum der Prozessluft, die das Graphitmaterial führt und/oder befördert, nach oben hin begrenzt und die Anzahl an Kontakten zwischen dem Graphitmaterial und jeweils mindestens einem Verrundungswerkzeug erhöht. Insbesondere verhindert der Abdeckring, dass Graphitmaterial ohne Wirkkontakt mit mindestens einem Verrundungswerkzeug durch die Vorrichtung zirkuliert. Weiterhin umfasst die Vorrichtung eine dem Produktauslass zugeordnete Absaugeinrichtung für Produktmaterial, wobei eine Absaugposition der Absaugeinrichtung direkt an dem inneren Leitring ausgebildet ist und wobei sich die Absaugeinrichtung radial zu dem inneren Leitring erstreckt.

Das in dem Prozessluftstrom geförderte Graphitmaterial wird durch ein- oder mehrfachem Wirkkontakt mit mindestens einem Verrundungswerkzeug der Vorrichtung mit einem Drall behaftet. Durch den mindestens einen Leitapparat wird das mit Drall behaftete Graphitmaterial in eine weitgehend senkrecht nach oben gerichtete Richtung umgeleitet und weitgehend ohne Drall zu der Trenneinrichtung zugeführt. Dies bewirkt eine optimale Anströmung der Trenneinrichtung, wodurch sich eine hohe Trennschärfe der Trenneinrichtung ergibt.

Die Aufgabeeinrichtung für das zu bearbeitende Graphitmaterial ist oberhalb der rotierenden Scheibe mit den Verrundungswerkzeugen angeordnet. Die rotierende Scheibe ist vorzugsweise innerhalb eines zylindrischen Bauteils angeordnet, wobei die Längsachse des zylindrischen Bauteils und die Drehachse der rotierenden Scheibe zusammenfallen. Die Innenmantelfläche des zylindrischen Bauteils stellt zumindest bereichsweise die sogenannte Prallfläche für das Graphitmaterial dar. Das über die Aufgabeeinrichtung in den Innenraum der Vorrichtung eingebrachte Graphitmaterial wird von den Verrundungswerkzeugen erfasst, beschleunigt und gegen die Prallfläche geführt. Vorzugsweise sind die Prallfläche und die Verrundungswerkzeuge derart ausgebildet, dass das Graphitmaterial in unterschiedlichen Winkeln und insbesondere mehrfach auf die Verrundungswerkzeuge auftrifft bevor es zur Prallfläche geführt wird. Dadurch kann eine besonders vorteilhafte Verformung der Graphitflocken erzielt werden, insbesondere wird dadurch die gewünschte Faltung der Graphitflocken erzielt.

Bei Auftreffen des Graphitmaterials auf die Verrundungswerkzeuge werden die Ecken der Graphitflocken gefaltet und um den Kern der jeweiligen Graphitflocke herumgewickelt. Kleinere Graphitteilchen agglomerieren zu größeren, insbesondere kugelförmigen, Teilchen. Zudem wird während der Verrundung die anfängliche innere Porosität minimiert. Die derartig verrundeten Graphitteilchen weisen eine geringere Oberfläche als die ursprünglich eingesetzten Graphitflocken auf. Dies bewirkt eine geringere irreversible Kapazität und zudem eine hohe Lebensdauer. Glatte Oberfläche der verrundeten Graphitteilchen verhindert ein Abblättern oder Aufschiefern. Das Pulver mit den verrundeten Graphitteilchen weist eine erhöhte Stampfdichte und somit eine hohe und insbesondere erhöhte Energiedichte auf. Das Pulver mit den verrundeten Graphitteilchen eignet sich besonders für die Herstellung von Lithiumionen-Batterien, da die Lithiumionen einen vereinfachten Zugang zum Graphit durch die zwischen den verrundeten Graphitteilchen ausgebildeten Hohlräumen erhalten, insbesondere lagern sich die Lithiumionen in den Ebenen zwischen den gefalteten Graphitflocken an. Das Pulver mit den verrundeten Graphitteilchen wird nach dem Verrunden und vor der Verwendung zur Batterieherstellung etc. nochmals chemisch gereinigt und beschichtet.

Die Trenneinrichtung kann beispielsweise als Windsichter mit einem Sichterrad ausgeführt sein, um einen beim Verrunden der Graphitflocken gegebenenfalls entstehenden Abrieb in Form von Feinmaterial und/oder Feinstmaterial während des laufenden Verrundungsprozesses zu entfernen. Die Trenneinrichtung ist oberhalb der Scheibe mit den Verrundungswerkzeugen angeordnet. Vorzugsweise fallen die Drehachse der rotierenden Scheibe mit den Verrundungswerkzeugen und die Drehachse des Sichterrads zusammen. Insbesondere ist das Sichterrad koaxial oberhalb der rotierenden Scheibe mit den Verrundungswerkzeugen angeordnet. Im unteren Bereich der Vorrichtung ist ein Zufuhrstutzen für Prozessluft ausgebildet. Die Prozessluft wird insbesondere von unten nach oben gerichtet zugeführt und zum Verrundungsbereich, insbesondere den Verrundungswerkzeuge, und über den Leitapparat zur Trenneinrichtung hingeleitet. Zusätzlich besteht innerhalb der Vorrichtung ein interner Umlauf an Prozessluft. Durch diesen Umlauf der Prozessluft wird das Graphitmaterial mehrfach an die Verrundungswerkzeuge herangeführt. Zudem wird durch die Prozessluft das Feinmaterial und/oder Feinstmaterial mitgenommen und über die Trenneinrichtung aus der Vorrichtung entfernt.

Gemäß einer Ausführungsform umfassen die Verrundungswerkzeuge jeweils eine in Richtung der Drehachse weisende Seitenfläche, die vorzugsweise in Richtung der Drehachse konvex ausgebildet ist und/oder die in Richtung der Drehachse einen Radius aufweist oder die durch eine Mehrzahl von Vielecken ausgebildet ist. Insbesondere kann vorgesehen sein, dass die Verrundungswerkzeuge jeweils eine Längsachse aufweisen, die mit einer von der Drehachse der Scheibe ausgehenden Radialen zusammenfällt. Die zur Drehachse der Scheibe weisende Seitenfläche des Verrundungswerkzeuges weist einen Radius auf oder ist als Vieleck ausgeführt. Vorzugsweise wird die Seitenfläche durch die Radiale spiegelsymmetrisch unterteilt. Die Ausbildung der zur Drehachse der Scheibe weisende Seitenfläche in konvexer Form, als Radius oder als ein Vieleck mit einer Mehrzahl von winklig zueinander angeordneten Teilbereichen führt zu einer schonenden Beanspruchung des Graphitmaterials. Insbesondere wird durch die gewählte Form der Verrundungswerkzeuge die Wahrscheinlichkeit erhöht, dass das Graphitmaterial in einem für den Faltvorgang vorteilhaften 90 Grad Winkel auftrifft. Bevorzugt bewirkt somit jeder Wirkkontakt zwischen dem Graphitmaterial und einem Verrundungswerkzeug einen Faltvorgang. Dadurch wird das Graphitmaterial in gewünschter Weise gefaltet und insbesondere nicht zerkleinert, da es immer zu einem zentralen Stoß zwischen der Oberfläche der Verrundungswerkzeuge und dem Graphitmaterial kommt.

Gemäß einer Ausführungsform beträgt ein Abstand zwischen benachbarten Verrundungswerkzeugen jeweils zwischen 0,5 mal einer Breite der Verrundungswerkzeuge bis fünfmal der Breite der Verrundungswerkzeuge. Die Breite der Verrundungswerkzeuge wird dabei orthogonal zur Radialen auf der des jeweilige Verrundungswerkzeug angeordnet ist, ermittelt. Insbesondere handelt es sich hierbei um eine Radiale ausgehend von der Drehachse der Scheibe, auf der die Verrundungswerkzeuge angeordnet sind. Dagegen wird eine Länge der Verrundungswerkzeuge auf der Radialen ausgehend von der Drehachse der Scheibe ermittelt. Vorzugsweise beträgt der Abstand weniger als dreimal der Breite der Verrundungswerkzeuge, besonders bevorzugt weniger als 1,5 mal der Breite der Verrundungswerkzeuge.

Die Anzahl der Verrundungswerkzeuge beträgt vorzugsweise zwischen 15 bis 35 Verrundungswerkzeuge pro m Umfang der rotierenden Scheibe, auf der die Verrundungswerkzeuge angeordnet sind.

Gemäß der Erfindung umfasst der Leitapparat eine Mehrzahl von Leitelementen und einen innener Leitring. Insbesondere sind die Leitelemente am mindestens einen Leitring angeordnet. Hierbei kann vorgesehen sein, dass die Anzahl der Leitelemente geringer ist als die Anzahl der Verrundungswerkzeuge. Alternativ kann die Anzahl der Leitelemente der Anzahl der Verrundungswerkzeuge entsprechen oder aber die Anzahl der Leitelemente ist höher als die Anzahl der Verrundungswerkzeuge. Das über die Aufgabeeinrichtung zugeführte Graphitmaterial trifft auf den Leitring auf und wird dabei am Sichterrad vorbeigeführt, so dass bereits vorhandenes Feinmaterial und/oder Feinstmaterial und im laufenden Prozess aus der Vorrichtung ausgesichtet wird. Anschließend trifft das Graphitmaterial auf die rotierende Scheibe mit den Verrundungswerkzeugen auf, die die Energie für die Verrundung aufbringen. Dabei wird das Graphitmaterial erfasst, beschleunigt und gegen die Prallfläche geschleudert, wodurch die Faltung des Graphitmaterials und dementsprechend die Verrundung bewirkt wird.

Das Graphitmaterial wird vorzugsweise für eine definierte Zeit in der Vorrichtung behandelt, wobei es insbesondere mehrfach in Wirkkontakt mit den rotierenden Verrundungswerkzeugen kommt und entsprechend umgeformt wird. Die Zeit ist insbesondere derart bemessen, dass davon ausgegangen werden kann, dass nach Ablauf der Zeit das Graphitmaterial weitgehend nur noch aus verrundeten Graphitteilchen besteht, die vorteilhaft für die Herstellung von Batterien verwendet werden können. Nach Abschluss des Verrundungsprozesses, insbesondere nach Ablauf einer vordefinierten Bearbeitungszeit, werden die verrundeten Graphitteilchen über einen Produktauslass der Vorrichtung entnommen, beispielsweise wird das Produkt aus der Vorrichtung abgesaugt. Dabei erfolgt das Absaugen des Produktes direkt am inneren Leitring des Leitapparates. Dadurch wird sichergestellt, dass nur Produkt aus der Vorrichtung entnommen wird, das zuvor am Sichterrad vorbeigeführt wurde, wobei das Feinmaterial und/oder Feinstmaterial entfernt wurde.

Der Leitapparat umfassend die Leitelemente und den Leitring ist oberhalb der rotierenden Scheibe mit den Verrundungswerkzeugen angeordnet. Insbesondere ist der Leitapparat statisch innerhalb der Vorrichtung angeordnet. Die Leitelemente des Leitapparates sind gemäß einer Ausführungsform als Leitbleche ausgebildet sind, die an dem Leitring angeordnet sind. Die Leitbleche sind bereichsweise jeweils in einer senkrechten Ebene zur rotierenden Scheibe und zu einer Tangente der rotierenden Scheibe oberhalb der Verrundungswerkzeuge angeordnet und/oder ausgebildet. Insbesondere erstrecken sich die Leitbleche im Wesentlichen senkrecht radial zur Drehachse der rotierenden Scheibe mit den Verrundungswerkzeugen. Vorzugsweise ist der untere Bereich der Leitbleche entgegen der Drehrichtung der rotierenden Scheibe abgeknickt, so dass ein stumpfer Winkel zwischen dem abgeknickten Bereich und dem senkrechten Bereich des Leitblechs ausgebildet ist. Der abgeknickte Bereich bewirkt einen optimierten stoßfreien Eintritt der Graphitteilchen in den vertikalen Bereich des die Leitelemente umfassenden Leitapparates. Insbesondere unterstützt der abgeknickte Bereich des Leitelementes die vorgeschriebene Umleitung des mit Drall behafteten Feinmaterials und/oder Feinstmaterials in eine Richtung senkrecht zur rotierenden Scheibe. Hierbei wird das zugeführte Graphitmaterial durch die Luftströmung innerhalb der Vorrichtung zuerst am Sichterrad vorbeigeführt, trifft auf die rotierende Scheibe auf und wird zu den Verrundungswerkzeugen und der Prallfläche geleitet.

Gemäß einer Ausführungsform erfolgt eine Regulierung der Zugabe an Graphitmaterial über eine Steuerungseinrichtung der Vorrichtung. Die Steuerungseinrichtung kontrolliert beispielsweise den Antrieb der rotierenden Scheibe mit den Verrundungswerkzeugen und/oder den Antrieb der Trenneinrichtung und/oder weitere Maschinenkomponenten der Vorrichtung, insbesondere kontrolliert die Steuerungseinrichtung die jeweilige Drehzahl der rotierenden Scheibe und/oder die Trenneinrichtung. Beispielsweise kann die Steuerungseinrichtung die Zugabe von Graphitmaterial aufgrund eines sogenannten Abschaltwertes regeln. Beim Befüllen der laufenden Vorrichtung mit Graphitmaterial steigt die Stromaufnahme der Antriebe. Die Steuerungseinrichtung enthält Informationen zu mindestens einem Abschaltwert, insbesondere Informationen zu Stromaufnahmewerten der Antriebe. Beim Erreichen eines definierten Abschaltwertes oder beider definierter Abschaltwerte, wird die Zufuhr von weiterem Graphitmaterial beendet. Beispielsweise umfasst die Aufgabeeinrichtung ein Ventil, das bei Erreichen des Abschaltwertes durch die Steuerungseinrichtung angesteuert und aufgrund des Steuersignals verschlossen wird, so dass kein weiteres Graphitmaterial in die Vorrichtung gelangt.

Im Verlauf des Verrundungsprozesses können die Stromaufnahmewerte wieder sinken, so dass die Messwerte Auskunft über den Fortschritt des Verrundungsprozesses geben können. Insbesondere kann gemäß einer Ausführungsform vorgesehen sein, dass bei einem Unterschreiten eines zweiten definierten Stromaufnahmewertes, der auch als zweiter Abschaltwert bezeichnet wird, die Dosierung und/oder Materialaufgabe noch einmal gestartet werden kann. Die Antriebe von rotierender Scheibe und/oder Trenneinrichtung werden während des gesamten Prozesses nicht abgeschaltet, solange sich noch Graphitmaterial in der Vorrichtung befindet. Alternativ kann vorgesehen sein, dass die Vorrichtung nach vollständiger Befüllung, d.h. nach Erreichen des ersten Abschaltwertes, eine definierte Zeit betrieben wird, die beispielweise vorab empirisch ermittelt wurde und nach der die Verrundung aller Graphitflocken sicher abgeschlossen ist. Die Kontrolle der Zufuhr an Graphitmaterial über den Abschaltwert stellt sicher, dass die Vorrichtung nicht überfüllt wird und dass die Vorrichtung insbesondere bei jedem Produktionszyklus reproduzierbar gleich befüllt wird.

Dem Produktauslass, über den die verrundeten Graphitteilchen nach Beendigung des Verrundungsprozesses aus der Vorrichtung entnommen werden, umfasst - wie bereits oben beschrieben - eine geeignete Absaugeinrichtung für das Produktmaterial. Dabei ist die Absaugposition der Absaugeinrichtung direkt an einem inneren Leitring des Leitapparates ausgebildet und der Produktauslass erstreckt sich insbesondere radial zu dem inneren Leitring. Die Absaugeinrichtung (auch als Absaugeinheit bezeichnet) erzeugt einen Unterdruck. Für die Produktentnahme wird die Absaugeinheit geöffnet und die abgesaugte Luft wird in ein Abscheideorgan, beispielsweise einen Zyklon mit Filter, abgeführt. Hierbei wird das Produkt umfassend die verrundeten Graphitteilchen aus der abgesaugten Luft abgetrennt. In Verbindung mit diesem Volumenstrom wird das Produkt pneumatisch aus dem Prozessraum gefördert und die Konzentration an Produkt im Prozessraum der Vorrichtung nimmt bis zur vollständigen Entleerung der Vorrichtung rapide ab. Während des Produktentnahme-Vorgangs bleibt die Entfernung von Feinmaterial und/oder Feinstmaterial über die Trenneinrichtung und die Beanspruchung der Graphitpartikel durch die an der rotierenden Scheibe angeordneten Verrundungswerkzeuge weiterhin aktiv.

Erfindungsgemäß weist die Absaugeinheit eine Absaugposition direkt an dem inneren Leitring des Leitapparates auf. Die Abführung des Produktes durch die Absaugeinheit erfolgt insbesondere radial zu dem inneren Leitring. Während des Verrundens des Graphitmaterials ist die Absaugeinheit beispielsweise durch einen sich radial zum inneren Leitring erstreckenden, beweglichen Zylinder verschlossen. Zur Entnahme des verrundeten Graphitmaterials wird die Absaugeinheit durch Verschieben des beweglichen Zylinders geöffnet und das Produkt-Luftgemisch umfassend die verrundeten Graphitteilchen wird in die Absaugeinheit abgesaugt.

Um die Prozessbedingungen weiter zu optimieren, kann vorgesehen sein, dass die Geschwindigkeit, mit der die rotierende Scheibe und somit die Verrundungswerkzeuge bewegt werden, im laufenden Betrieb variiert werden kann. Beispielsweise kann vorgesehen sein, dass zuerst eine niedrige Rotationsgeschwindigkeit gewählt wird, die im laufenden Betrieb anschließend auf eine maximale Rotationsgeschwindigkeit erhöht wird. Alternativ kann es für bestimmte Prozesse auch vorteilhaft sein, zuerst mit einer hohen Geschwindigkeit zu starten und diese im laufenden Betrieb zu reduzieren. Vorzugsweise wird die Vorrichtung mit einer maximalen Drehzahl der rotierenden Scheibe zwischen 60 Meter pro Sekunde und 120 Meter pro Sekunde betrieben (bezogen auf den Umfang der Scheibe).

Mit der erfindungsgemäßen Vorrichtung und dem erfindungsgemäßen Verfahren können auf einfache und kostengünstige Weise verrundete Graphitteilchen hergestellt werden, die für die Herstellung von Batterien optimiert sind. Insbesondere werden hierbei die Graphitflocken verrundet, indem die Ecken der Graphitflocken gefaltet und um den Kern der Graphitflocken herumgewickelt werden. Dabei können kleinere Graphitteilchen zu größeren kugelförmigen oder kugelähnlichen Teilchen agglomerieren. Zudem wird beim Verrunden die innere Porosität der Graphitteilchen minimiert, was für die Batterieherstellung ebenfalls vorteilhaft ist.

Die erfindungsgemäße Vorrichtung zeichnet sind insbesondere durch eine geringe Maschinenbaugröße auf. Insbesondere entsteht innerhalb der Vorrichtung kein Abrieb oder nur geringe Mengen an Abrieb in Form von Feinmaterial und/oder Feinstmaterial, welches unmittelbar entfernt wird. Insbesondere wird der Abrieb direkt während des Verrundungsprozesses und vor sowie auch während der Produktentnahme aus der Vorrichtung entfernt, so dass mit der Vorrichtung und dem Verfahren besonders gute Ausbeuten an verrundetem, zumindest weitgehend feingutfreiem, homogenen Graphitmaterial erzielt werden. Insbesondere wird mit der Vorrichtung und dem Verfahren ein besonders homogenes, weitgehend abriebfreies Produkt erzeugt, welches insbesondere eine Stampfdichte von mindestens 800 Gramm pro Liter aufweist.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine erfindungsgemäße Vorrichtung zum Verrunden von Graphitflocken eines Graphitmaterials.
Figuren 2A bis 2E zeigen das Graphitmaterial - insbesondere die verwendeten Graphitflocken - vor, während und nach der Prozessierung innerhalb einer erfindungsgemäßen Vorrichtung.
Figuren 3A bis 3D zeigen verschiedene Ansichten einer weiteren Ausführungsform einer erfindungsgemäßen Vorrichtung zum Verrunden von Graphitflocken eines Graphitmaterials.
Figuren 4A und 4B zeigen unterschiedliche Ansichten in den Innenraum einer weiteren Ausführungsform einer erfindungsgemäßen Vorrichtung.

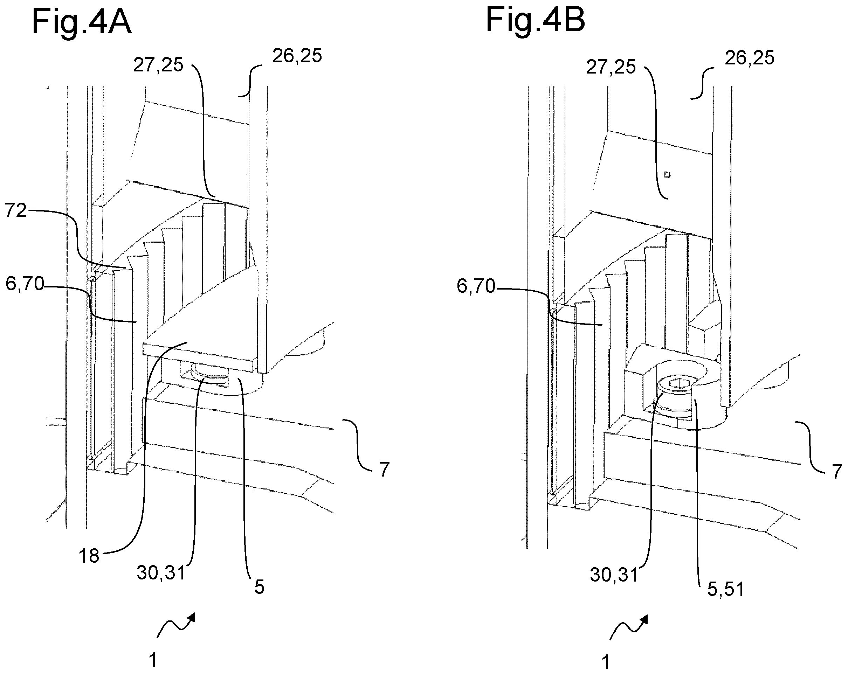

Figuren 4A und 4B zeigen unterschiedliche Ansichten eines Teilbereichs der Vorrichtung.

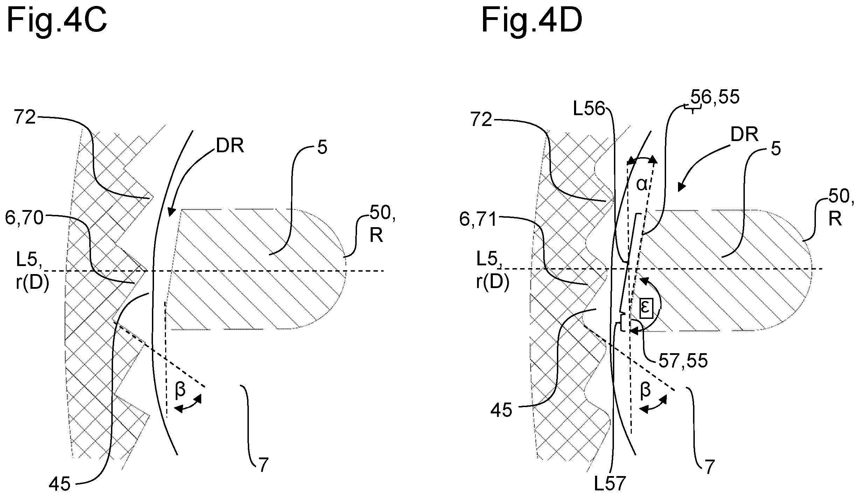

Figuren 4C und 4D zeigen unterschiedliche Ausbildungen der Prallfläche.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

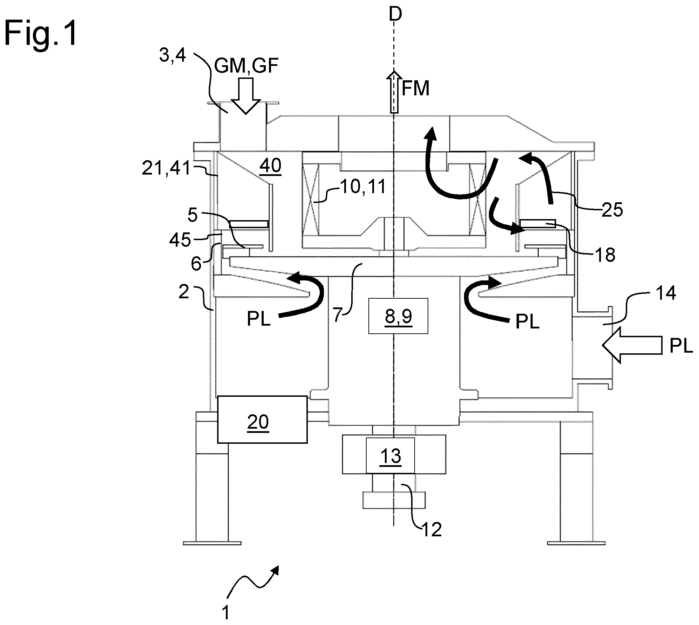

Figur 1 zeigt eine erfindungsgemäße Vorrichtung 1 zum Verrunden von Graphitflocken GF eines Graphitmaterials GM. Die Vorrichtung 1 umfasst ein annähernd als stehender Zylinder ausgebildetes Gehäuse 2, an dessen Oberseite eine Aufgabeeinrichtung 3 zur Zuführung des Graphitmaterials GM angeordnet ist, insbesondere eine Aufgabeeinrichtung 3 zur Zuführung von Graphitflocken GF. Insbesondere ist im gezeigten Ausführungsbeispiel die Aufgabeeinrichtung 3 als Fallrohr 4 ausgebildet, es kann aber auch vorgesehen sein, dass das Graphitmaterial GM über eine Injektor- Aufgabe zugeführt wird.

Das Graphitmaterial GM trifft auf Verrundungswerkzeuge 5 auf. Dabei werden die Ecken der Graphitflocken GF gefaltet und um den Kern der jeweiligen Graphitflocke GF herumgewickelt. Kleinere Graphitteilchen agglomerieren zu größeren, insbesondere kugelförmigen Teilchen. Zudem wird während der Verrundung die anfängliche innere Porosität minimiert. Die derartig verrundeten Graphitteilchen vGT weisen eine geringere Oberfläche als die ursprünglich eingesetzten Graphitflocken GF auf. Dies bewirkt eine geringere irreversible Kapazität und zudem eine hohe Lebensdauer. Glatte Oberfläche der verrundeten Graphitteilchen vGT verhindert ein Abblättern oder Aufschiefern. Das Pulver mit den verrundeten Graphitteilchen vGT weist eine erhöhte Stampfdichte und somit eine hohe Energiedichte auf. Das Pulver eignet sich besonders für die Herstellung von Lithiumionen- Batterien, da die Lithiumionen einen vereinfachten Zugang zum Graphit durch die zwischen den verrundeten Graphitteilchen vGT ausgebildeten Hohlräumen haben, insbesondere lagern sich die Lithiumionen in den Ebenen zwischen den gefalteten Graphitflocken an. Das Pulver mit den verrundeten Graphitteilchen wird nach dem Verrunden und vor der Verwendung zur Batterieherstellung etc. nochmals chemisch gereinigt und dann beschichtet.

Die Vorrichtung 1 weist eine Mehrzahl von an einer rotatorisch beweglichen Scheibe 7 angeordneten Verrundungswerkzeugen 5 auf. Das über die Aufgabeeinrichtung 3 in den Innenraum der Vorrichtung eingebrachte Graphitmaterial GM wird von den Verrundungswerkzeugen 5 erfasst, beschleunigt und gegen eine Prallfläche 6 geführt. Die Prallfläche 6 stellt insbesondere einen Bereich der zylindrisch ausgebildeten Innenmantelfläche 21 des Gehäuses 2 dar.

Die Verrundungswerkzeuge 5 sind insbesondere am allumfänglich und in regelmäßigen Abständen zueinander an einem Außenumfang einer sich drehend beweglichen Scheibe 7 angeordnet, die über eine erste Antriebswelle 8 an einem ersten Antrieb 9 angeordnet ist. Die Prallfläche 6 und die Verrundungswerkzeuge 5 sind derart ausgeführt, dass das Graphitmaterial GM in unterschiedlichen Winkeln auf die Verrundungswerkzeuge 5 auftrifft, wodurch eine besonders vorteilhafte Verformung, insbesondere Faltung, der Graphitflocken GF erzielt werden kann. Die Verrundungswerkzeuge 5 sind insbesondere für eine möglichst hohe Anzahl von Partikelstößen in unterschiedlichen Aufprallwinkeln optimiert.

Die Vorrichtung 1 umfasst weiterhin eine Trenneinrichtung 10, beispielsweise einen Windsichter mit Sichterrad 11. Beim Verrunden der Graphitflocken GF kann ein Abrieb in Form von Feinmaterial und/oder Feinstmaterial FM entstehen. Da das gewünschte Endprodukt EP vorzugsweise nur verrundete Graphitteilchen vGT aufweisen soll, wird das Feinmaterial und/oder Feinstmaterial FM direkt innerhalb der Vorrichtung 1 von den verrundeten Graphitteilchen vGT abgetrennt und aus der Vorrichtung 1 entfernt. Die Trenneinrichtung 10 ist oberhalb der Scheibe 7 mit den Verrundungswerkzeugen 5 angeordnet. Das Sichterrad 11 ist über eine zweite Antriebswelle 12 mit einem zweiten Antrieb 13 verbunden. Insbesondere ist vorgesehen, dass die erste Antriebswelle 8 und die zweite Antriebswelle 12 koaxial angeordnet sind.

Über einen Zufuhrstutzen 14 im unteren Bereich der Vorrichtung 1, insbesondere unterhalb der rotierenden Scheibe 7 mit den Verrundungswerkzeugen 5, wird von unten nach oben gerichtet Prozessluft PL zugeführt, die zum Verrundungsbereich und über die Leitelemente 25 zur Trenneinrichtung 10 hingeleitet wird. Die Prozessluft PL nimmt dabei das Feinmaterial und/oder Feinstmaterial FM mit und führt dieses über die Absaugstutzen 16 aus der Vorrichtung 1 ab.

Innerhalb der Vorrichtung 1 tritt das Graphitmaterial GM mindestens einmal in Wirkkontakt mit mindestens einem Verrundungswerkzeug 5, wodurch das Graphitmaterial GM mit einem Drall behaftet wird. Durch die Leitelemente 25 werden die mit Drall behafteten Graphitflocken GF, die mit Drall behafteten verrundeten Graphitteilchen vGT und das mit Drall behaftete Feinmaterial und/oder Feinstmaterial FM in eine senkrechte Richtung umgeleitet, insbesondere senkrecht zur rotierenden Scheibe 7, und erreichen die Trenneinrichtung 10 somit zumindest weitgehend ohne Drall. Dies bewirkt eine optimale Anströmung der Trenneinrichtung 10, wodurch sich eine hohe Trennschärfe ergibt.

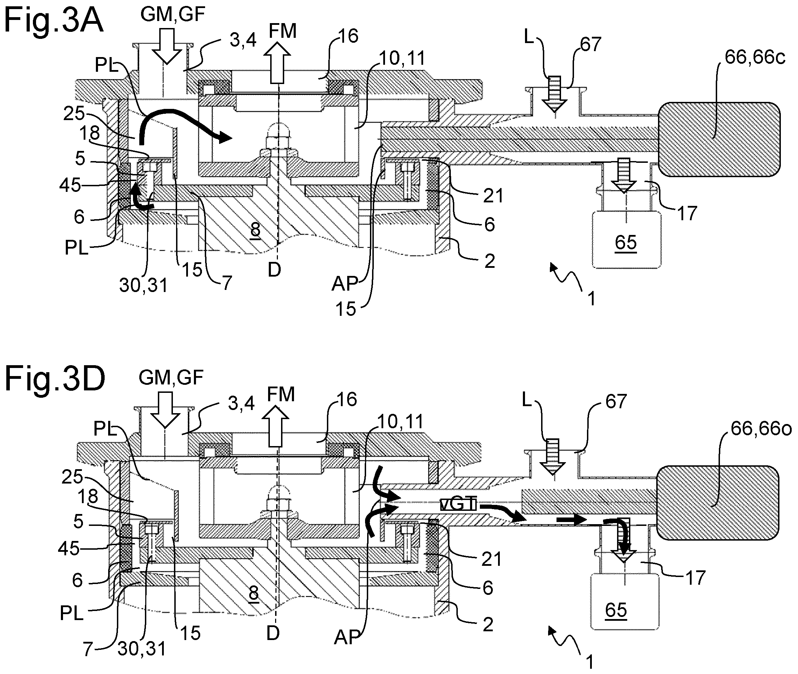

Gemäß einer Ausführungsform der Erfindung wird das Graphitmaterial GM über die Aufgabeeinrichtung 3 dem Prozessraum 40 der Vorrichtung 1 zugeführt. Das Graphitmaterial GM trifft auf den Leitring 41 auf und wird dabei GM am Sichterrad 11 vorbeigeführt, so dass bereits vorhandener feiner Staub ausgesichtet wird. Das Graphitmaterial GM trifft dann auf die Scheibe 7 mit den Verrundungswerkzeugen 5 auf, die die Energie für die Verrundung aufbringen. Insbesondere wird das Graphitmaterial GM von der Scheibe 7 mit den Verrundungswerkzeugen 5 erfasst, beschleunigt und gegen die Prallfläche 6 geschleudert. Während dieser ersten beiden Verfahrensschritte ist der Produktauslass 17 verschlossen, wie dies im Zusammenhang mit den Figuren 3A und 3D nachfolgend näher beschrieben wird.

Die Prozessluft PL gelangt über den Zufuhrstutzen 14 in das Gehäuse 2 der Vorrichtung 1 und durchströmt einen zwischen der Scheibe 7 mit den Verrundungswerkzeugen 5 und der Prallfläche 6 ausgebildeten Spalt 45. Beim Durchströmen des Spaltes 45 werden die beanspruchten Graphitteilchen von dem Luftvolumenstrom durch den Leitring 41 gezielt dem Sichterrad 11 angeboten. Das Material, welches nunmehr zumindest teilweise verrundete Graphitteilchen umfasst, gelangt in einer internen Strömung zurück zu der Scheibe 7 mit den Verrundungswerkzeugen 5, der feine Staub, insbesondere Feinmaterial und/oder Feinstmaterial FM, verlässt mit der Prozessluft und/oder Prozessluft PL über den Absaugstutzen 16 die Vorrichtung 1.

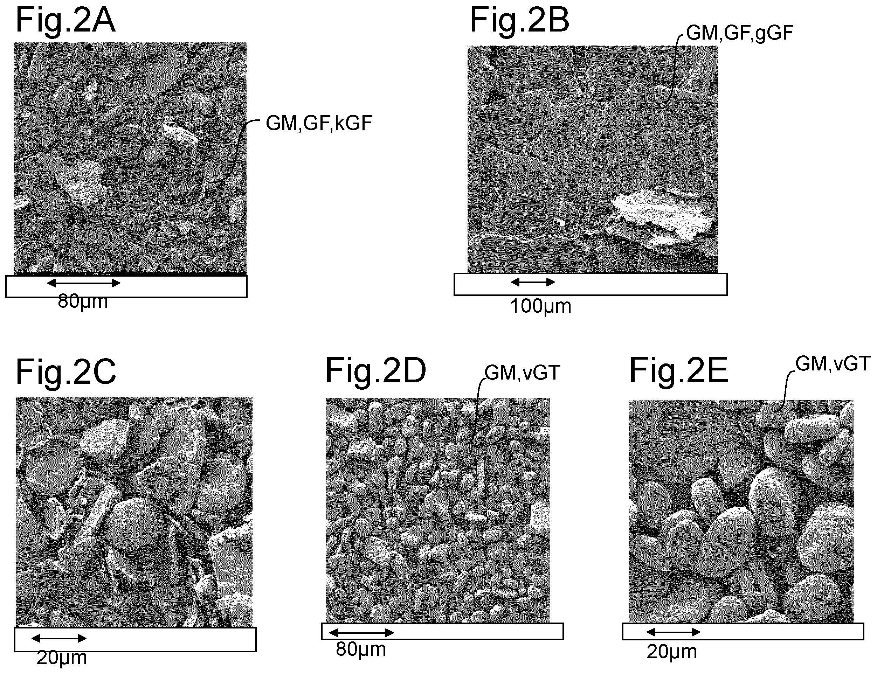

Die verrundeten Graphitteilchen vGT (vgl. Figuren 2D und 2E) werden über eine Absaugvorrichtung ähnlich einer Injektoraufgabe durch den Produktauslass 17 abgezogen. Das Absaugen erfolgt direkt am Inneren des Leitrings 41. Dadurch wird sichergestellt, dass kein Graphitmaterial GM aus der Vorrichtung 1 abgezogen wird, welches nicht zuvor am Sichterrad 11 vorbeigeführt wurde.

Das Graphitmaterial GM wird für eine definierte Zeit in der Vorrichtung behandelt, wobei es insbesondere mehrfach in Wirkkontakt mit den rotierenden Verrundungswerkzeugen 5 kommt, wodurch die Graphitflocken GF gefaltet und zu verrundeten Graphitteilchen vGT umgeformt werden. Nach einer vordefinierten Zeit kann man davon ausgehen, dass das Graphitmaterial GM weitgehend nur noch aus verrundeten Graphitteilchen vGT besteht. Das Endprodukt in Form von verrundeten Graphitteilchen vGT kann nunmehr über einen Produktauslass 17 aus der Vorrichtung 1 entnommen und beispielsweise für die Herstellung von Batterien verwendet werden.

Zu weiteren Verbesserung der Beanspruchung des Graphitmaterials GM durch eine verbesserte Strömungsführung kann vorgesehen sein, dass über den Verrundungswerkzeugen 5 jeweils ein Abdeckring 18 angeordnet ist. Der Abdeckring 18 erstreckt sich vorteilhafterweise über alle am Umfang der rotierenden Scheibe 7 angeordneten Verrundungswerkzeuge 5 und ermöglicht eine vorteilhafte Zirkulation der zu verrundenden Graphitteilchen, da durch den Abdeckring 18 die Strömungsführung der Graphitteilchen innerhalb der Vorrichtung 1 optimiert ist. Dieser Abdeckring 18 verhindert insbesondere, dass das grobe Graphitmaterial GM, insbesondere die Graphitflocken GF und/oder bereits verrundete Graphitteilchen vGT nach oben geschleudert werden und ohne Kontakt zu den Verrundungswerkzeugen 5 durch die Vorrichtung 10 zirkulieren. Der Abdeckring 18 erzwingt insbesondere einen mehrfachen Wirkkontakt zwischen den Verrundungswerkzeugen 5 und dem groben Graphitmaterial GM.

Die Vorrichtung 1 umfasst weiterhin gemäß einer Ausführungsform eine Steuerungseinrichtung 20, vermittels derer beispielsweise der erste Antrieb 9 und/oder der zweite Antrieb 13 und somit die Drehzahl des Sichterrads **11** und/oder die Drehzahl der Scheibe 7 mit den Verrundungswerkzeugen 5 reguliert und/oder gemäß den Produktanforderungen eingestellt werden kann/können.

Weiterhin kann vorgesehen sein, dass die Zugabe von Graphitmaterial GM aufgrund eines sogenannten Abschaltwertes geregelt wird. Insbesondere wird dieser Abschaltwert durch die Vorrichtung 1 selbst generiert. Beim Befüllen der laufenden Vorrichtung 1 mit Graphitmaterial GM steigt die Stromaufnahme der Antriebe 9, 13. Die Steuerungseinrichtung 20 enthält Informationen zu mindestens einem Abschaltwert, insbesondere Informationen zu Stromabnahmewerten der Antriebe 9, 13. Bei Erreichen eines definierten Abschaltwertes oder beider definierter Abschaltwerte, wird die Zufuhr von weiterem Graphitmaterial GM beendet. Beispielsweise umfasst die Aufgabeeinrichtung 3 (vergleiche auch Beschreibung zu den Figuren 3A bis 3C) ein Ventil, das bei Erreichen des Abschaltwertes durch die Steuerungseinrichtung 20 angesteuert und aufgrund des Steuersignals verschlossen wird, so dass kein weiteres Graphitmaterial GM in die Vorrichtung 1 gelangt.

Im Verlauf des Verrundungsprozesses können die Stromabnahmewerte wieder sinken, so dass dies Auskunft über den Fortschritt des Verrundungsprozesses geben kann. Insbesondere kann gemäß einer Ausführungsform vorgesehen sein, dass bei einem Unterschreiten eines zweiten definierten Stromabnahmewertes, der auch als zweiter Abschaltwert bezeichnet wird, die Dosierung und/oder Materialaufgabe noch einmal gestartet werden kann. Die Antriebe 9, 13 werden nicht abgeschaltet solange sich noch Graphitmaterial GM in der Vorrichtung 1 befindet.

Alternativ kann vorgesehen sein, dass die Vorrichtung 1 nach vollständiger Befüllung, d.h. nach Erreichen des ersten Abschaltwertes, eine definierte Zeit betrieben wird, die beispielweise vorab empirisch ermittelt wurde und nach der die Verrundung aller Graphitflocken GF sicher abgeschlossen ist.

Die Kontrolle der Zufuhr an Graphitmaterial GM über den Abschaltwert stellt sicher, dass die Vorrichtung 1 nicht überfüllt wird und insbesondere bei jedem Produktionszyklus reproduzierbar gleich befüllt wird.

Die Verrundung der Graphitmaterials GM mit der hier beschriebenen Vorrichtung 1 und gemäß dem hier beschriebenen Verfahren lässt sich in drei Schritte unterteilen, insbesondere Befüllen, Verrunden und Austragen. Diese drei Schritte sind nicht eindeutig voneinander zu trennen, werden aber im Folgenden einzeln beschrieben.

Beim Befüllen wird das Graphitmaterial GM beispielsweise durch einen Injektor in den Prozessraum 40 eingebracht. Der Prozessraum 40 wird weiterhin von einer Luftströmung Prozessluft PL mit einer die rotierende Scheibe 7 aufgeprägten Zirkulation durchströmt. Die Verrundungswerkzeuge 5 auf der rotierenden Scheibe 7 beschleunigen die Graphitteilchen gemeinsam mit der Prozessluft PL in Richtung der Innenmantelfläche 21 des Gehäuses 2 und die Graphitteilchen folgen der Luftströmung zu dem Sichterrad 11. Anschließend durchlaufen die Graphitteilchen den von der Luftströmung vorgegebenen Kreis erneut. Die Leistungsaufnahme des zweiten Antriebs 13 des Sichterrads 11 steigt in Abhängigkeit von der Produktbeladung an. So kann die Vorrichtung 1 bis zu einem gewählten Grad befüllt werden und man erhält einen direkten Prozesswert der als Schaltpunkt genutzt werden kann. Während der Befüllung kann ggf. zeitweise die Dosierung "Nachdosieren" um anfängliche Gewichts- und/oder Konzentrationsabnahmen auszugleichen. Ist jedoch der gewünschte Zustand erreicht, endet das Befüllen und der zweite Schritt des Verrundens beginnt.

In Realität beginnt der zweite Schritt des Verrundens sobald erstes Graphitmaterial GM in die Vorrichtung 1 gelangt. Denn sowie die ersten Graphitteilchen im Luftstrom der Prozessluft PL geführt werden, beginnt auch die Verrundung. Wir betrachten jedoch als einheitlichen Startpunkt den oben angesprochenen Schaltpunkt des Sichterstroms der innerhalb der Vorrichtung 1 generiert wird. Sobald der gewünschte Füllgrad in der Vorrichtung 1 erreicht ist, wird bis nach dem dritten Schritt des Austragens die Dosierung nicht wieder in Betrieb genommen, auch wenn der vordefinierte Schaltpunkt zu einem späteren Zeitpunkt unterschritten wird. Dies ist notwendig, um für alle Graphitteilchen eine einheitliche Verrundungszeit zu garantieren. Eine Variation der Prozessparameter über den Verrundungszeitverlauf kann in manchen Bereichen sinnvoll sein.

Der dritte Schritt des Austragens erfolgt insbesondere unter Verwendung einer Absaugeinheit. Die Absaugeinheit erzeugt einen Unterdruck und wird durch einen, mit einer Klappe verschlossenen, Absaugstutzen mit der Vorrichtung 1 verbunden. Zu Beginn des dritten Austrageschrittes oder Produktentnahmeschrittes wird die Absaugeinheit geöffnet und die abgesaugte Luft wird in ein Abscheideorgan geführt. Eine Ausführungsform einer Absaugeinheit 65 wird nachfolgend im Zusammenhang mit den Figuren 3A und 3D beschrieben. Als Abscheideorgan eignet sich beispielsweise ein Zyklon mit Filter. Hier wird das Produkt umfassend die verrundeten Graphitteilchen aus dem Gas abgetrennt. In Verbindung mit diesem Volumenstrom wird pneumatisch das Produkt aus dem Prozessraum 40 gefördert und die Konzentration nimmt bis zur vollständigen Entleerung rapide ab. Während des Vorgangs bleibt die Entfernung von Feinmaterial und/oder Feinstmaterial FM und die Beanspruchung der Partikel durch die an der rotierenden Scheibe 7 angeordneten Verrundungswerkzeuge 5 weiterhin aktiv.

Figuren 2A bis 2E zeigen das Graphitmaterial GM - insbesondere die als Ausgangsmaterial verwendeten Graphitflocken GF - vor, während und nach der Prozessierung innerhalb einer erfindungsgemäßen Vorrichtung 1. Insbesondere zeigen Figuren 2A und 2B unterschiedliche als Ausgangsmaterial verwendete Graphitflocken GF in unterschiedlicher Vergrößerung. Das Graphitmaterial GM gemäß Figur 2A enthält im Wesentlichen kleine Graphitflocken GF, während in Figur 2B im Wesentlichen große Graphitflocken gGF enthalten sind. Figur 2C zeigt eine Zwischenstufe bei der Verrundung von Graphitmaterial GM, bei dem bereits eine teilweise Verrundung durch Umfalten der großen Graphitflocken gGF und/oder durch Agglomeration kleiner Graphitflocken kGF stattgefunden hat. Figuren 2D und 2E zeigen innerhalb der erfindungsgemäßen Vorrichtung verrundetes Graphitmaterial GM, welches im Wesentlichen nur noch verrundete Graphitteilchen vGT enthält und welches insbesondere kein Feinmaterial und/oder Feinstmaterial aufweist.

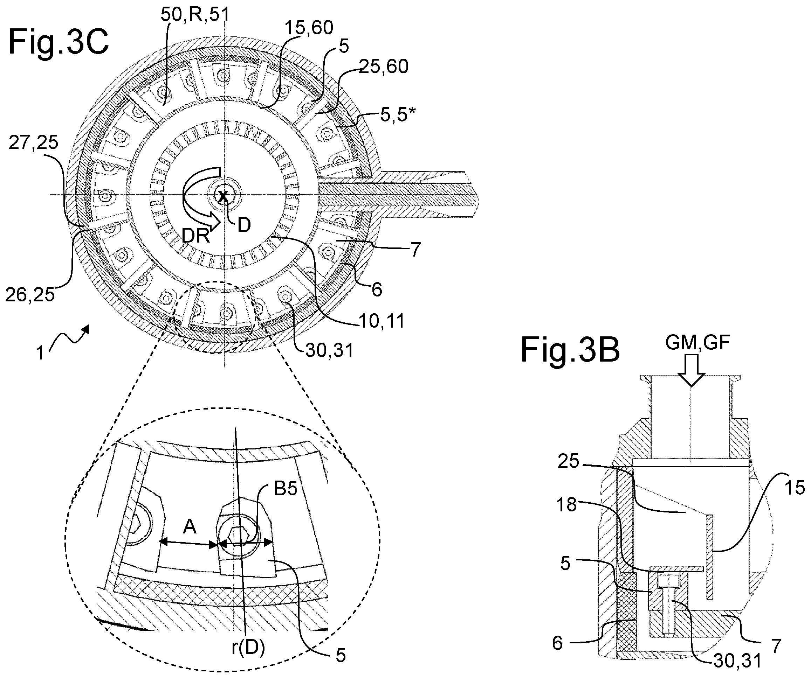

Figuren 3A bis 3D sowie Figuren 4A und 4B zeigen verschiedene Ansichten einer weiteren Ausführungsform einer erfindungsgemäßen Vorrichtung 1 zum Verrunden von Graphitflocken GF eines Graphitmaterials GM. Insbesondere zeigt Figur 3A einen vertikalen Querschnitt durch einen oberen Bereich der Vorrichtung 1 mit geschlossener Absaugeinheit 65, Figur 3B zeigt eine vergrößerte Darstellung eines Teilbereichs von Figur 3A, Figur 3C zeigt einen horizontalen Querschnitt durch einen oberen Bereich der Vorrichtung 1 und Figur 3D zeigt einen vertikalen Querschnitt durch einen oberen Bereich der Vorrichtung 1 mit geöffneter Absaugeinheit 65.

An der Oberseite des Gehäuses 2 der Vorrichtung 1 ist eine Aufgabeeinrichtung 3 in Form eines Fallrohrs 4 zur Zuführung des beispielsweise Graphitflocken GF enthaltenden Graphitmaterials GM vorgesehen. Im Innenraum der Vorrichtung 1 ist eine rotierende Scheibe 7 angeordnet. Auf der Oberseite am äußeren Umfang der Scheibe 7, benachbart zu einer Innenmantelfläche 21 bzw. dem Leitring 41 des Gehäuses 2 der Vorrichtung 1, sind Verrundungswerkzeuge 5 in regelmäßiger Anordnung angeordnet und/oder befestigt. Die Scheibe 7 sitzt auf einer Antriebswelle 8 und wird durch diese rotatorisch um eine Drehachse D angetrieben. Die Innenmantelfläche 21 ist benachbart zur Scheibe 7 insbesondere als Prallfläche 6 ausgebildet und weist eine Strukturierung oder Profilierung auf, die das Zusammenfalten und/oder Agglomerieren des Graphitmaterials GM unterstützt.

Das über das Fallrohr 4 zugeführte Graphitmaterial GM trifft auf die auf der drehenden Scheibe 7 angeordneten und die daran angeordneten, umlaufenden Verrundungswerkzeuge 5 auf, wird beschleunigt und gegen die Prallfläche 6 geführt. Daran anschließend wird das Graphitmaterial GM über die aufsteigende Luftströmung vom Leitelement 25 zum Sichterrad 11 geführt.

Vorzugsweise weist die Absaugeinheit 65 eine Absaugposition AP direkt an dem inneren Leitring 15 des Leitapparates auf. Die Abführung des Produktes vermittels der Absaugeinheit 65 erfolgt insbesondere radial zu dem inneren Leitring 15. Während des Verrundens des Graphitmaterials GM ist die Absaugeinheit 65 durch einen sich radial zum inneren Leitring 15 erstreckenden, beweglichen Zylinder 66 verschlossen. Der Zylinder 66 befindet sich insbesondere in einer sogenannten Schließposition 66c (vergleiche Figur 3A). Insbesondere wird in diesem Fall durch die Absaugeinheit 65 nur Luft L über den Nebenluftstutzen 67 angesaugt. Dadurch wird verhindert, dass Graphitmaterial GM abgesaugt wird, bevor es auf die Verrundungswerkzeuge 5 und die Prallfläche 6 auftreffen kann. Die Absaugeinheit 65 wird erst zur Entnahme des verrundeten Graphitmaterials vGT über den Produktauslass 17 durch Verschieben des beweglichen Zylinders 66 geöffnet (vergleiche Figur 3D). Insbesondere wird ein Produkt-Luftgemisch umfassend die verrundeten Graphitteilchen vGT und über den Nebenluftstutzen 67 angesaugte Luft L während und nach dem Zurückfahren des Zylinders 66 in die Öffnungsposition 66o in die Absaugeinheit 65 abgesaugt.

Gemäß einer Ausführungsform kann vorgesehen sein, dass die Seitenfläche 50 der Verrundungswerkzeuge 5, die zur Drehachse D der Scheibe 7 weist, jeweils mit einem Radius R versehen ist. Diese gerundete Seitenfläche 50 bildet eine weitere Prallfläche 51, die das Verrunden des Graphitmaterials GM weiter unterstützt.

Weiterhin kann vorgesehen sein, dass alle auf der Scheibe 7 aufstehenden Seitenflächen der Verrundungswerkzeuge 5 jeweils eine identische Höhe aufweisen und dass die Oberseite der Verrundungswerkzeuge 5 jeweils in einer Ebene parallel zur Ebene der rotierenden Scheibe 7 angeordnet ist

Die Vorrichtung 1 umfasst weiterhin ein Sichterrad 11 als Trenneinrichtung 10, über das der beim Verrunden des Graphitmaterials GM entstehende Abrieb in Form von Feinmaterial und/oder Feinstmaterial FM abgetrennt und über den Absaugstutzten 16 aus der Vorrichtung 1 entfernt wird. Das Sichterrad 11 ist oberhalb der Scheibe 7 mit den Verrundungswerkzeugen 5 angeordnet ist. Im vorliegenden Ausführungsbeispiel ist das Sichterrad 11 an einer koaxialen Welle zur Antriebswelle 8 der Scheibe 7 angeordnet, so dass das Sichterrad 11 und die Scheibe 7 unabhängig voneinander rotatorisch bewegt werden können.

Über einen Zufuhrstutzen 14 im unteren Bereich der Vorrichtung wird Prozessluft PL zugeführt, die nach oben gerichtet zum Verrundungsbereich und die Leitelemente 25 durchströmt und dabei teilweise und hauptsächlich zur Trenneinrichtung 10 hingeleitet wird. Die Hauptströmung der Prozessluft PL nimmt das Feinmaterial und/oder Feinstmaterial FM mit und führt dieses über den Absaugstutzen 16 aus der Vorrichtung 1 ab.

Die Verrundungswerkzeuge 5 sind beispielsweise auf der Scheibe 7 aufgesetzt und an dieser über geeignete Befestigungsmittel 30 fixiert, beispielsweise vermittels einer Schraubverbindung 31, einer Schweißverbindung, einer Verklebung o.ä. Alternativ kann die Scheibe 7 mit den Verrundungswerkzeugen auch einstückig ausgebildet sein. Die Leitelemente 25 sind derart oberhalb der Verrundungswerkzeuge 5 angeordnet, dass sie die Verrundungswerkzeuge 5 teilweise von oben überdachen. Insbesondere ist vorgesehen, dass jeweils benachbarte Verrundungswerkzeuge 5 unterschiedlich von oben durch Leitelemente 25 überdacht werden. Vorzugsweise sind in regelmäßiger Anordnung auch einige Verrundungswerkzeuge 5* nicht durch Leitelemente 25 überdacht. Insbesondere kann vorgesehen sein, dass die Anzahl der Leitelemente 25 geringer ist als die Anzahl der Verrundungswerkzeuge 5. Da die Leitelemente 25 statisch innerhalb der Vorrichtung angeordnet ist, ändert sich im laufenden Betrieb der Vorrichtung permanent die relative Anordnung von Verrundungswerkzeugen 5 und Leitelementen 25.

Die Leitelemente 25 sind in diesem Ausführungsbeispiel insbesondere als im Wesentlichen senkrecht angeordnete, sich radial zur Drehachse D erstreckende Leitbleche 26 ausgebildet, die im unteren Bereich entgegen der Drehrichtung DR abgeknickt sein können, so dass ein stumpfer Winkel zwischen dem abgeknickten Bereich 27 und dem senkrechten Leitblech 26 ausgebildet ist (vergleiche auch Figuren 4A und 4B). Der abgeknickte Bereich 27 ist insbesondere entgegen der Drehrichtung DR abgeknickt und bewirkt einen optimierten stoßfreien Eintritt der Graphitteilchen in den vertikalen Teil des die Leitelemente 25 umfassenden Leitapparates 60. Insbesondere unterstützt der abgeknickte Bereich 27 des Leitelementes 25 die vorgeschriebene Umleitung des mit Drall behafteten Feinmaterials und/oder Feinstmaterials FM sowie des Graphitmaterials GM in eine Richtung senkrecht zur rotierenden Scheibe 7. Dabei wird das zugeführte Graphitmaterial innerhalb der Luftströmung zuerst am Sichterrad 11 vorbeigeführt, trifft auf die Scheibe 7 auf und wird zu den Verrundungswerkzeugen 5 und der Prallfläche 6 geleitet.

Die Leitelemente 25 können insbesondere an ihrer der Drehachse D zugewandten Seite über einen sogenannten Luftleitring 15 miteinander verbunden sein. Insbesondere bilden die Leitelement 25 zusammen mit dem Luftleitring 15 den sogenannten Leitapparat 60. Durch den mindestens einen Leitapparat 60 wird das nach dem Kontakt mit den Verrundungswerkzeugen 5 und/oder der Prallfläche 6 mit Drall behaftete Graphitmaterial GM in eine weitgehend senkrecht nach oben gerichtete Richtung umgeleitet und weitgehend ohne Drall zu der Trenneinrichtung 10 zugeführt. Dies bewirkt eine optimale Anströmung der Trenneinrichtung 10, wodurch sich eine hohe Trennschärfe ergibt. Ein Teil der Prozessluft PL kann als Sekundärströmung abgetrennt werden und innerhalb des Verrundungsbereichs zwischen Prallfläche 6 und Verrundungswerkzeug 5 zirkulieren. Diese Sekundärluft bewirkt unterstützend, dass das Graphitmaterial GM mehrfach und in unterschiedlichen Winkeln mit den Verrundungswerkzeugen 5 in Kontakt kommt und verbessert dadurch das Umfalten und/oder Agglomerieren des Graphitmaterials GM zu verrundeten Graphitteilchen vGT.

In den Figuren 3A und 3B ist weiterhin ein Abdeckring 18 oberhalb der Verrundungswerkzeuge 5 zu erkennen, die ebenfalls dazu dient, das Graphitmaterial GM in dem Verrundungsbereich zurück zu halten und dadurch die Anzahl der Kontakte zwischen dem Graphitmaterial GM und der Prallfläche und/oder den Verrundungswerkzeugen 5 zu erhöhen. Insbesondere wird durch den Abdeckring 18 die Zirkulation des Graphitmaterials GM innerhalb der Vorrichtung 1 aufgrund einer optimierten Strömungsführung verbessert.

Gemäß einer Ausführungsform beträgt ein Abstand A zwischen benachbarten Verrundungswerkzeugen 5 jeweils zwischen 0,5 mal einer Breite B5 der Verrundungswerkzeuge 5 bis fünfmal der Breite B5 der Verrundungswerkzeuge 5. Die Breite B5 der Verrundungswerkzeuge 5 wird dabei orthogonal zur Radialen r(D) ausgehend von der Drehachse D der Scheibe 7 ermittelt. Vorzugsweise beträgt der Abstand A weniger als dreimal der Breite B5 der Verrundungswerkzeuge 5, besonders bevorzugt weniger als 1,5 mal der Breite B5 der Verrundungswerkzeuge 5. Im dargestellten Beispiel gemäß Figur 3C beträgt der Anstand A in etwa einer Breite B5 der Verrundungswerkzeuge 5.

Die Anzahl der Verrundungswerkzeuge 5 beträgt vorzugsweise zwischen 15 bis 35 Verrundungswerkzeuge pro m Umfang der rotierenden Scheibe 7 auf der die Verrundungswerkzeuge 5 angeordnet ist.

Die Entnahme des Endproduktes, insbesondere der verrundeten Graphitteilchen vGT erfolgt über einen Produktauslass 17, vorzugsweise nachdem das Graphitmaterial GM eine definierte Zeit innerhalb der Vorrichtung 1 behandelt worden ist. Vorzugsweise ist dem Produktauslass 17 eine Absaugeinheit 65 zugeordnet. Die Absaugeinheit 65 erzeugt beispielsweise durch Zurückziehen eines dem Produktauslass 17 zugeordneten beweglichen Zylinders 66 einen Unterdruck und öffnet durch das Zurückziehen des beweglichen Zylinders 66 zudem den Produktauslass 17. Nunmehr wird innerhalb der Vorrichtung 1 befindliches Graphitmaterial GM, welches vorzugsweise nur noch aus verrundeten Graphitteilchen besteht, zusammen mit innerhalb der Vorrichtung 1 befindlicher Luft abgesaugt werden, wobei die abgesaugte Luft mit den Graphitteilchen zuerst in ein Abscheideorgan (nicht dargestellt) geführt wird, beispielsweise in einen Zyklon mit Filter. In dem Abscheideorgan wird das Produkt umfassend die verrundeten Graphitteilchen von der Luft abgetrennt.

Gemäß einer Ausführungsform der Erfindung handelt es sich bei dem Verfahren nicht um ein kontinuierliches Verfahren, bei dem Graphitmaterial GM laufend zugeführt und Endprodukt in Form von verrundeten Graphitteilchen vGT permanent entnommen wird, sondern um ein batch- Verfahren, bei dem die Vorrichtung 1 mit einer definierten Menge an Graphitmaterial GM befüllt wird und für eine definierte Zeit mit einem definierten Drehwert betrieben wird, bevor das Endprodukt in Form von verrundeten Graphitteilchen vGT entnommen wird.

Bei der Vorrichtung 1 wird das Graphitmaterial GM vorzugsweise erst nach erfolgter Verrundung an das Sichterrad 11 herangeführt, während der Abrieb in Form von Feinmaterial und/oder Feinstmaterial FM bereits während des Verrundungsprozesses zum Sichterrad 11 geführt und über einen Absaugstutzten 16 aus der Vorrichtung 1 abgeführt werden kann. Insbesondere erfolgt die Produktentnahme über den Produktauslass 17 erst nach dem Sichterprozess, so dass das entnommene Endprodukt im Wesentlichen nur verrundete Graphitteilchen vGT und insbesondere kein Feinmaterial und/oder Feinstmaterial FM aufweist.

Die Anzahl und Form der Verrundungswerkzeuge 5 ist auf das Verfahren abgestimmt und optimiert. Ebenso ist die Prallfläche 6 optimiert hinsichtlich schonender Beanspruchung des Graphitmaterials GM bei der Verrundung und zur Vermeidung von Feinmaterial und/oder Feinstmaterial FM.

Figuren 4A und 4B zeigen unterschiedliche Ansichten eines Teilbereichs der Vorrichtung 1 in perspektivischer Darstellung. Zur Erklärung der einzelnen Bauteile wird insbesondere auf die Beschreibung zu Figur 3B verwiesen. Die Figuren 4A und 4B entsprechen einander im Wesentlichen, wobei in der Darstellung der Figur 4B der Abdeckring 18 oberhalb der Verrundungswerkzeuge 5 weggelassen wurde, damit die Verrundungswerkzeuge 5 besser zu erkennen sind.

Figuren 4C und 4D zeigen unterschiedliche Ausbildungen der Prallfläche 6 sowie ein auf der umlaufenden Scheibe 7 angeordnetes Verrundungswerkzeug 5. Das Verrundungswerkzeug 5 weist eine Längsachse L5 auf, die mit einer von der Drehachse der Scheibe 7 ausgehenden Radiale r(D) zusammenfällt. Die zur Drehachse der Scheibe 7 weisende Seitenfläche 50 des Verrundungswerkzeuges 5 weist einen Radius R auf oder ist als Vieleck ausgeführt. Vorzugsweise wird die Seitenfläche 50 durch die Radiale r(D) spiegelsymmetrisch unterteilt.

Die Ausbildung der zur Drehachse der Scheibe 7 weisende Seitenfläche 50 als Radius R oder als ein Vieleck mit einer Mehrzahl von winklig zueinander angeordneten Teilbereichen führt zu einer schonenden Beanspruchung des Graphitmaterials GM. Dadurch wird dieses gefaltet und insbesondere nicht zerkleinert, da es immer zu einem zentralen Stoß zwischen der Oberfläche der Verrundungswerkzeuge 5 und dem Graphitmaterial GM kommt.

Die der zur Drehachse der Scheibe 7 weisende Seitenfläche 50 gegenüberliegende Seitenfläche 55 wird insbesondere auch als von der Drehachse abgewendete Seitenfläche 55 bezeichnet. Vorzugsweise wird diese von der Drehachse abgewendete Seitenfläche 55 durch die Radiale r(D) nicht spiegelsymmetrisch unterteilt, da die Seitenfläche 55 aus zwei in einem stumpfen Winkel ε aufeinanderstehenden Teilbereichen 56 und 57 besteht. Insbesondere ist der in Drehrichtung DR vorauseilende Teilbereich 57 orthogonal oder im Wesentlichen orthogonal zur Radialen r(D) angeordnet, während zwischen dem in Drehrichtung DR nachlaufenden Teilbereich 56 und einer Verlängerung des vorauseilenden Teilbereichs 56 ein spitzer Winkel α ausgebildet ist. Vorzugsweise gilt, dass die Summe aus dem spitzen Winkel α und dem stumpfen Winkel ε 180 Grad ergeben.

Weiterhin ist vorzugsweise vorgesehen, dass die Länge L57 des in Drehrichtung DR vorauseilenden Teilbereichs 57 deutlich geringer ist als die Länge L56 des in Drehrichtung DR nachlaufenden Teilbereichs 56. Insbesondere beträgt die Länge L57 zwischen 5% bis 30 % der Länge L56, besonders bevorzugt zwischen 13% bis 20%.

Durch die vorbeschriebene Anordnung der Teilbereiche 56, 57 der Seitenfläche 55 ergibt sich insbesondere, dass der in Drehrichtung DR vorauseilende Teilbereich 57 näher an der Prallfläche 6 angeordnet ist. Der vorbeschriebene Winkel α wird auch als Freiwinkel bezeichnet. Durch diesen Freiwinkel α ergibt sich insbesondere, dass sich der zwischen Prallfläche 6 und Verrundungswerkzeug 5 ausgebildete Spalt 45 in Drehrichtung DR verjüngt, was das schonende Verrunden des Graphitmaterials GM zusätzlich unterstützt. Insbesondere wird dadurch einer ungewünschten thermischen Beanspruchung des Graphitmaterials GM durch Quetschen und/oder Reibung entgegengewirkt.

Weiterhin ist zwischen der Profilierung der Prallfläche 6 und dem näher an der Prallfläche 6 angeordneten Teilbereich 57 ein Winkel β ausgebildet, der je nach Ausführungsvariante zwischen 50 Grad bis 90 Grad beträgt. Besonders bevorzugt ist der Winkel β immer größer als 55 Grad und zudem immer kleiner als 90 Grad.

Gemäß den Figuren 1, 3 und 4 wird die Prallfläche insbesondere durch die Innenmantelfläche eines zylindrischen Bauteils ausgebildet. Gemäß Figur 4C ist die Prallfläche 6 als ein Zylinder mit einer gezackten Innenmantelfläche 70 ausgebildet. Durch diese Profilierung der Prallfläche 6 wird die Oberfläche, auf die das Graphitmaterial GM auftrifft, vergrößert. Zudem stellen die Ecken der gezackten Innenmantelfläche 70 weitere Prallelemente 72 dar, die das Verrunden des Graphitmaterials GM weiter unterstützen. Gemäß Figur 4D ist die Prallfläche 6 als ein Zylinder mit einer gewellten Innenmantelfläche 71 ausgebildet, wodurch die Oberfläche, auf die das Graphitmaterial GM auftrifft, ebenfalls vergrößert wird. Bei der gewellten Innenmantelfläche 71 wird insbesondere auf scharfe Kanten an der Prallfläche 6 verzichtet, wodurch das Graphitmaterial GM noch schonender behandelt wird, wodurch die Verrundung weiter optimiert werden kann.

Mit der erfindungsgemäßen Vorrichtung 1 und dem erfindungsgemäßen Verfahren ist die Ausbeute an verrundeten Graphitteilchen vGT bezogen auf die Aufgabemenge an Graphitmaterial GM gegenüber den aus dem Stand der Technik bekannten Vorrichtungen und Verfahren deutlich erhöht.

Die Vorrichtung und das Verfahren sind insbesondere zum Verrunden von mehrschichtigen Materialien geeignet, die ein Umfalten und/oder Agglomerieren des Materials erlauben. Zudem müssen die zu verarbeitenden Materialien eine gewisse Flexibilität aufweisen, damit sie bei der Verrundung nicht brechen.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 2: Gehäuse
- 3: Aufgabeeinrichtung
- 4: Fallrohr
- 5,5*: Verrundungswerkzeug
- 6,6-5,6-19: Prallfläche
- 7: Scheibe
- 8: erste Antriebswelle
- 9: erster Antrieb
- 10: Trenneinrichtung
- 11: Sichterrad
- 12: zweite Antriebswelle
- 13: zweiter Antrieb
- 14: Zufuhrstutzen
- 15: Luftleitring
- 16: Absaugstutzen
- 17: Produktauslass
- 18,18-5,18-19: Abdeckring
- 19: zweite Verrundungswerkzeuge
- 20: Steuerungseinrichtung
- 21: Innenmantelfläche
- 25: Leitelemente
- 26: Leitbleche
- 27: abgeknickter Bereich
- 30: Befestigungsmittel
- 31: Schraubverbindung
- 40: Prozessraum
- 41: Leitring
- 45: Spalt
- 50: zur Drehachse weisende Seitenfläche
- 51: Prallfläche
- 55, 55-5,55-19: von der Drehachse abgewendete Seitenfläche
- 56: Teilbereich
- 57: Teilbereich
- 60: Leitapparat
- 65: Absaugeinheit / Absaugeinrichtung

- 66: beweglicher Zylinder
- 66c: beweglicher Zylinder in Schließposition
- 66o: beweglicher Zylinder in Öffnungsposition
- 67: Nebenluftstutzen
- 70: gezackte Innenmantelfläche
- 71: gewellte Innenmantelfläche
- 72: weiteres Prallelement
- A: Abstand
- AP: Absaugposition
- B5: Breite der Verrundungswerkzeuge
- d5,d19,: Abstand von der Drehachse
- d6-1,d6-2: Abstand von der Drehachse
- D: Drehachse
- DR: Drehrichtung
- EP: Endprodukt
- FM: Feinmaterial und/oder Feinstmaterial
- GF: Graphitflocken
- GM: Graphitmaterial
- gGF: große Graphitflocken
- kGF: kleine Graphitflocken
- L: Luft
- L5: Längsachse
- L56: Länge des in Drehrichtung nachlaufenden Teilbereichs
- L57: Länge des in Drehrichtung vorauseilenden Teilbereichs
- R: Radius
- PL: Prozessluft
- vGT: verrundete Graphitteilchen

## Patentansprüche

1. Vorrichtung (1) zum Verrunden eines Graphitmaterials (GM) umfassend eine Aufgabeeinrichtung (3) zur Zuführung des Graphitmaterials (GM) zur Vorrichtung (1);
eine Mehrzahl von rotatorisch umlaufend ausgebildeten Verrundungswerkzeugen (5); die am äußeren Umfang einer um eine Drehachse (D) und in einer Drehrichtung (DR) rotierenden Scheibe (7) angeordnet sind,
mindestens ein Leitapparat (60); welcher eine Mehrzahl von Leitelementen (25) und einen inneren Leitring (15) umfasst;
eine Trenneinrichtung (10) zum Abtrennen von Feinmaterial und Feinstmaterial (FM);
einen Produktauslass (17);
wobei oberhalb der Verrundungswerkzeuge (5) ein Abdeckring (18) angeordnet ist; **dadurch gekennzeichnet, dass** die Vorrichtung (1) weiterhin eine dem Produktauslass (17) zugeordnete Absaugeinrichtung (65) für Produktmaterial umfasst,
wobei eine Absaugposition der Absaugeinrichtung (65) direkt an dem inneren Leitring (15) ausgebildet ist und
wobei sich die Absaugeinrichtung (65) radial zu dem inneren Leitring (15) erstreckt.

2. Vorrichtung (1) nach Anspruch 1, wobei sich der Abdeckring (18) über alle am äußeren Umfang der Scheibe (7) angeordneten Verrundungswerkzeuge (5) erstreckt.

3. Vorrichtung (1) nach Anspruch 1 oder 2, wobei das Graphitmaterial (GM) nach ein- oder mehrfachem Wirkkontakt mit mindestens einem Verrundungswerkzeug (5) mit einem Drall behaftet ist und wobei das Graphitmaterial (GM) durch den mindestens einen Leitapparat (60) in eine weitgehend senkrechte Richtung umleitbar ist und weitgehend ohne Drall zu der Trenneinrichtung (10) zuführbar ist.

4. Vorrichtung (1) nach einem der voranstehenden Ansprüche, wobei die Verrundungswerkzeuge (5) jeweils eine in Richtung der Drehachse (D) weisende Seitenfläche (50) umfassen, wobei diese Seitenfläche (50) in Richtung der Drehachse (D) konvex ausgebildet ist oder einen Radius (R) aufweist oder wobei die in Richtung der Drehachse (D) weisende Seitenfläche (50) durch eine Mehrzahl von Vielecken ausgebildet ist.

5. Vorrichtung (1) einem der voranstehenden Ansprüche, wobei die Anzahl der Leitelemente (25) geringer ist als die Anzahl der Verrundungswerkzeuge (5).

6. Vorrichtung (1) nach einem der voranstehenden Ansprüche, wobei die Vorrichtung (1) mindestens eine Einrichtung zu Luftzufuhr einer von unten nach oben gerichteten Luftströmung umfasst, wobei vermittels der zugeführten Luft das Graphitmaterial (GM) mehrfach an die Verrundungswerkzeuge (5) heranführbar ist und wobei die Luftzufuhr weiterhin zur Abtrennung des Feinmaterials und Feinstmaterials (FM) von dem verrundeten Graphitmaterial (GM) ausgebildet ist.

7. Vorrichtung (1) nach einem der voranstehenden Ansprüche, wobei die Trenneinrichtung ein Windsichter mit Sichterrad (11) ist, wobei das Sichterrad koaxial oberhalb der rotierenden Scheibe (7) mit den Verrundungswerkzeugen (5) angeordnet ist.

8. Vorrichtung (1) nach einem der Ansprüche 5 bis 7, wobei die Leitelemente (25) als Leitbleche ausgebildet sind, die an dem Leitring angeordnet sind und wobei der Leitring (15) statisch oberhalb der rotierenden Scheibe (7) mit den Verrundungswerkzeugen (5) angeordnet ist, wobei die Leitbleche bereichsweise jeweils in einer senkrechten Ebene zur rotierenden Scheibe (7) und zu einer Tangente der rotierenden Scheibe (7) oberhalb der Verrundungswerkzeuge (5) ausgebildet sind und wobei die Leitbleche in einem unteren Bereich von der senkrechten Ebene entgegen der Drehrichtung (DR) abgeknickt ausgebildet sind.

9. Vorrichtung (1) nach einem der voranstehenden Ansprüche umfassend weiterhin eine Steuerungseinrichtung (20), wobei vermittels der **Steuerungseinrichtung** (20) die Zuführung von Graphitmaterial (GM) über die Aufgabeeinrichtung (3) steuerbar ist.

10. Vorrichtung (1) nach einem der voranstehenden Ansprüche, wobei die Absaugeinrichtung (65) einen beweglichen Zylinder (66) umfasst oder wobei der Absaugeinrichtung (65) ein beweglicher Zylinder (66) zugeordnet ist, wobei der bewegliche Zylinder (66) in einer ersten Arbeitsposition den Produktauslass (17) verschließt.

11. Verfahren zum Verrunden eines Graphitmaterials (GM) in einer Vorrichtung (1),
wobei das Graphitmaterial (GM) in Wirkkontakt mit mindestens einem Verrundungswerkzeug (5) aus einer Mehrzahl von rotatorisch umlaufend ausgebildeten Verrundungswerkzeugen (5) der Vorrichtung (1) tritt;
und wobei oberhalb der Verrundungswerkzeuge (5) ein Abdeckring (18) angeordnet ist,
wobei der Abdeckring (18) den Bewegungsraum für einen Graphitmaterial (GM) führenden Prozessluftstrom begrenzt und eine Anzahl an Kontakten zwischen dem Graphitmaterial (GM) und dem mindestens einen Verrundungswerkzeug (5) erhöht,
wobei Produktmaterial direkt an einem inneren Leitring (15) der Vorrichtung (1) abgesaugt wird,
wobei sich eine Absaugeinrichtung (65) der Vorrichtung (1) radial zu dem inneren Leitring (15) erstreckt.

12. Verfahren nach Anspruch 11, welches in einer Vorrichtung (1) nach einem der Ansprüche 1 bis 10 durchgeführt wird, wobei das verrundete Graphitmaterial (GM) drallfrei zu einer Trenneinrichtung (10) der Vorrichtung (1) geleitet wird.

13. Verfahren nach Anspruch 11 oder 12, wobei eine Steuerungseinrichtung (20) der Vorrichtung (1) Informationen zu einem Abschaltwert enthält, wobei bei Erreichen des definierten Abschaltwertes die Zufuhr von weiterem Graphitmaterial (GM) beendet wird, insbesondere wobei der Abschaltwert aus einem Wert der Stromaufnahme der Antriebe berechnet wird.

## Claims

1. An apparatus (1) for rounding a graphite material (GM), the apparatus (1) comprising
an inlet (3) for feeding the graphite material (GM) to the apparatus (1);
a plurality of rounding tools (5) designed to rotate in a circulating manner, which rounding tools (5) are arranged on the outer circumference of a disc (7) rotating about an axis of rotation (D) and in a direction of rotation (DR);
at least one guide apparatus (60), which comprises a plurality of guide elements (25) and an inner guide ring (15);
a separating device (10) for separating fine material and ultrafine material (FM);
a product outlet (17);
wherein a cover ring (18) is arranged above the rounding tools (5), **characterised in that**
the apparatus (1) furthermore comprises a suction device (65) for product material assigned to the product outlet (17),
wherein a suction position of the suction device (65) is formed directly on the inner guide ring (15), and
wherein the suction device (65) extends radially to the inner guide ring (15).

2. The apparatus (1) according to claim 1, wherein the cover ring (18) extends over all rounding tools (5) arranged on the outer circumference of the disc (7).

3. The apparatus (1) according to claim 1 or 2, wherein the graphite material (GM) has an angular momentum after single or multiple active contact with at least one rounding tool (5), and wherein the graphite material (GM) is redirectable into a substantially perpendicular direction by the at least one guide apparatus (60) and is feedable to the separating device (10) largely without angular momentum.

4. The apparatus (1) according to one of the previous claims, wherein the rounding tools (5) each comprise a side surface (50) facing toward the axis of rotation (D), wherein this side surface (50) is designed to be convex or has a radius (R) toward the axis of rotation (D), or wherein the side surface (50) facing toward the axis of rotation (D) is formed by a plurality of polygons.

5. The apparatus (1) according to one of the previous claims, wherein the number of guide elements (25) is less than the number of rounding tools (5).

6. The apparatus (1) according to one of the previous claims, wherein the apparatus (1) comprises at least one device to supply air for an airflow directed upward from below, wherein the graphite material (GM) is feedable several times to the rounding tools (5) by means of the supplied air, and wherein the air supply is furthermore designed to separate the fine material and ultrafine material (FM) from the rounded graphite material (GM).

7. The apparatus (1) according to one of the previous claims, wherein the separating device is an air classifier with classifier wheel (11), wherein the classifier wheel is arranged coaxially above the rotating disc (7) with the rounding tools (5).

8. The apparatus (1) according to one of the claims 5 to 7, wherein the guide elements (25) are designed as guide plates which are arranged on the guide ring, and wherein the guide ring (15) is arranged statically above the rotating disc (7) with the rounding tools (5), wherein the guide plates are formed above the rounding tools (5), each in some areas in a plane perpendicular to the rotating disc (7) and to a tangent of the rotating disc (7), and wherein the guide plates are designed to be bent in a lower area away from the perpendicular plane in the direction opposite to the direction of rotation (DR).

9. The apparatus (1) according to one of the previous claims, furthermore comprising a control device (20), wherein the feed of graphite material (GM) via the inlet (3) is controllable by means of the control device (20).

10. The apparatus (1) according to one of the previous claims, wherein the suction device (65) comprises a movable cylinder (66) or wherein the suction device (65) is assigned a movable cylinder (66), wherein the movable cylinder (66) in a first working position closes the product outlet (17).

11. A method for rounding a graphite material (GM) in an apparatus (1),
wherein the graphite material (GM) comes into active contact with at least one rounding tool (5) of a plurality of rounding tools (5) of the apparatus (1), which rounding tools (5) are designed to rotate in a circulating manner,
and wherein a cover ring (18) is arranged above the rounding tools (5), wherein the cover ring (18) limits the movement space for a process air flow carrying graphite material (GM) and increases a number of contacts between the graphite material (GM) and the at least one rounding tool (5),
wherein product material is sucked off directly at an inner guide ring (15) of the apparatus (1),
wherein a suction device (65) of the apparatus (1) extends radially to the inner guide ring (15).

12. The method according to claim 11, which is carried out in an apparatus (1) according to one of the claims 1 to 10, wherein the rounded graphite material (GM) is guided angular momentum-free to a separating device (10) of the apparatus (1).

13. The method according to claim 11 or 12, wherein a control device (20) of the apparatus (1) contains information on a switch-off value, wherein the feed of further graphite material (GM) is stopped when the defined switch-off value has been reached, in particular, wherein the switch-off value is calculated from a value of the current consumption of the drives.

## Revendications

1. Dispositif (1) à arrondir un matériau de graphite (GM), comprenant:
un dispositif d'alimentation (3) destiné à alimenter le dispositif (1) en matériau de graphite (GM) ;
une pluralité d'outils à arrondir rotatifs (5) qui sont disposés sur la circonférence extérieure d'un disque (7) tournant autour d'un axe de rotation (D) et dans un sens de rotation (DR) ;
au moins un appareil de guidage (60) qui comprend une pluralité d'éléments de guidage (25) et une bague de guidage intérieure (15);
un dispositif de séparation (10) destiné à séparer du matériau fin et du matériau ultrafin (FM) ;
une sortie de produit (17);
dans lequel une bague de recouvrement (18) est disposée au-dessus des outils à arrondir (5); **caractérisé par le fait que**
le dispositif (1) comprend en outre un dispositif d'aspiration (65) pour du matériau de produit, qui est associé à la sortie de produit (17),
dans lequel une position d'aspiration du dispositif d'aspiration (65) est réalisée directement sur la bague de guidage intérieure (15), et
dans lequel le dispositif d'aspiration (65) s'étend radialement par rapport à la bague de guidage intérieure (15).

2. Dispositif (1) selon la revendication 1, dans lequel la bague de recouvrement (18) s'étend sur tous les outils à arrondir (5) disposés sur la circonférence extérieure du disque (7).

3. Dispositif (1) selon la revendication 1 ou 2, dans lequel le matériau de graphite (GM) est soumis à un moment cinétique après un ou plusieurs contacts avec au moins un outil à arrondir (5), et dans lequel le matériau de graphite (GM) peut être redirigé par ledit au moins un appareil de guidage (60) dans une direction largement verticale et peut être amené au dispositif de séparation (10) dans une large mesure sans moment cinétique.

4. Dispositif (1) selon l'une quelconque des revendications précédentes, dans lequel les outils à arrondir (5) comprennent chacun une surface latérale (50) orientée dans la direction de l'axe de rotation (D), cette surface latérale (50) étant convexe dans la direction de l'axe de rotation (D) ou présentant un rayon (R), ou la surface latérale (50) orientée dans la direction de l'axe de rotation (D) étant formée par une pluralité de polygones.

5. Dispositif (1) selon l'une quelconque des revendications précédentes, dans lequel le nombre des éléments de guidage (25) est inférieur au nombre des outils à arrondir (5).

6. Dispositif (1) selon l'une quelconque des revendications précédentes, dans lequel le dispositif (1) comprend au moins un dispositif d'alimentation en air d'un flux d'air dirigé de bas en haut, dans lequel le matériau de graphite (GM) peut être amené à plusieurs reprises vers les outils à arrondir (5) grâce à l'air amené, et dans lequel l'alimentation en air est en outre conçu pour séparer les matériaux fins et ultrafins (FM) du matériau de graphite arrondi (GM).

7. Dispositif (1) selon l'une quelconque des revendications précédentes, dans lequel le dispositif de séparation est un classificateur à air équipé d'une roue de classement (11), dans lequel la roue de classement est disposée de façon coaxiale au-dessus du disque rotatif (7) avec les outils à arrondir (5).

8. Dispositif (1) selon l'une quelconque des revendications 5 à 7, dans lequel les éléments de guidage (25) sont conçus en tant que plaques de guidage qui sont disposées sur la bague de guidage, et dans lequel la bague de guidage (15) est disposée statiquement au-dessus du disque rotatif (7) avec les outils à arrondir (5), dans lequel les plaques de guidage sont réalisées par zones respectivement dans un plan perpendiculaire au disque rotatif (7) et à une tangente du disque rotatif (7) au-dessus des outils à arrondir (5), et dans lequel, dans une zone inférieure, les plaques de guidage sont réalisées de manière à être coudées à l'opposé du sens de rotation (DR), à partir du plan perpendiculaire.

9. Dispositif (1) selon l'une quelconque des revendications précédentes, comprenant en outre un dispositif de commande (20), dans lequel l'alimentation en matériau de graphite (GM) via le dispositif d'alimentation (3) peut être commandée au moyen du dispositif de commande (20).

10. Dispositif (1) selon l'une quelconque des revendications précédentes, dans lequel le dispositif d'aspiration (65) comprend un cylindre mobile (66) ou dans lequel un cylindre mobile (66) est associé au dispositif d'aspiration (65), le cylindre mobile (66) fermant la sortie de produit (17) dans une première position de travail.

11. Procédé à arrondir un matériau de graphite (GM) dans un dispositif (1),
dans lequel le matériau de graphite (GM) entre en contact actif avec au moins un outil à arrondir (5) parmi une pluralité d'outils à arrondir rotatifs (5) du dispositif (1);
et dans lequel une bague de recouvrement (18) est disposée au-dessus des outils à arrondir (5),
dans lequel la bague de recouvrement (18) limite l'espace de mouvement pour un flux d'air de processus transportant du matériau de graphite (GM) et augmente un nombre de contacts entre le matériau de graphite (GM) et ledit au moins un outil à arrondir (5),
dans lequel du matériau de produit est aspiré directement au niveau d'une bague de guidage intérieure (15) du dispositif (1),
dans lequel un dispositif d'aspiration (65) du dispositif (1) s'étend radialement par rapport à la bague de guidage intérieure (15).

12. Procédé selon la revendication 11, qui est mis en œuvre dans un dispositif (1) selon l'une quelconque des revendications 1 à 10, dans lequel le matériau de graphite arrondi (GM) est guidé sans moment cinétique vers un dispositif de séparation (10) du dispositif (1).

13. Procédé selon la revendication 11 ou 12, dans lequel un dispositif de commande (20) du dispositif (1) contient des informations relatives à une valeur de coupure, dans lequel, lorsque la valeur de coupure définie est atteinte, l'alimentation en matériau de graphite supplémentaire (GM) est terminée, en particulier dans lequel la valeur de coupure est calculée à partir d'une valeur de la consommation de courant des entraînements.
